# EUROPEAN PATENT SPECIFICATION

(11) **EP 2 921 759 B1**
(45) Date of publication and mention of the grant of the patent: **04.09.2019**
(21) Application number: 15159662.4
(22) Date of filing: 18.03.2015
(51) Int. Cl.: F16L 37/56, F16L 37/14, F16L 39/00

(54) **DEVICE FOR THE DISTRIBUTION OF FLUIDS**
VORRICHTUNG ZUR VERTEILUNG VON FLÜSSIGKEITEN
DISPOSITIF POUR LA DISTRIBUTION DE FLUIDES

(30) Priority: 18.03.2014 IT VR20140066
(43) Date of publication of application: 23.09.2015
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(56) References cited:
- CA-A1- 985 331
- DE-A1- 10 000 289
- DE-B3-102006 026 263
- US-A- 4 289 339

## Description

The present invention relates to a device for the distribution of fluids.

Fluid distribution networks have, along their extension, distribution manifolds which are connected in input to an intake duct and have in output a plurality of delivery ports that can be connected, by means of connectors, to respective delivery ducts.

The number of delivery ports is determined substantially by the type of manifold used and by the overall space available.

However, during the completion of the network or as a consequence of specific interventions, it is often necessary to connect the manifold, or more usually a portion of duct of the network, to additional delivery ducts.

Such operations are sometimes complicated from the practical point of view and in many cases entail the need to replace or add additional distribution manifolds.

DE10000289 discloses a fluid feed tube having a central two-part deflector part provided with connecting pipe parts, for connection of hose ends. Ribs are provided for mutual connection of the connecting pipe parts. The central two-part deflector part having a first opening and at least two second openings that are mutually associated through respective connecting pipe parts. The at least two second openings can be connected to a second body.

The aim of the present invention is to solve the problems and obviate the drawbacks described above, by providing a fluid distribution device that is structurally simple, thus achieving simpler installation, especially during use or during intervention on the network.

An object of the invention is to provide a distribution device that is considerably easier and more practical to use than solutions of the known type.

Another object of the invention is to provide a device that is extremely compact and has a competitive production cost, so as to make its use advantageous also from the economic standpoint.

This aim, as well as these and other objects that will become better apparent hereinafter, are achieved by a fluid distribution device according to claim 1.

Further characteristics and advantages of the invention will become better apparent from the description of some preferred but not exclusive embodiments of a fluid distribution device according to the invention, illustrated by way of non-limiting example in the accompanying drawings, wherein:
Figure 1 is a perspective view of a distribution manifold associated with distribution devices according to the invention;
Figure 2 is a front view of the manifold shown in Figure 1;
Figure 3 is a top view of the manifold of Figure 1;

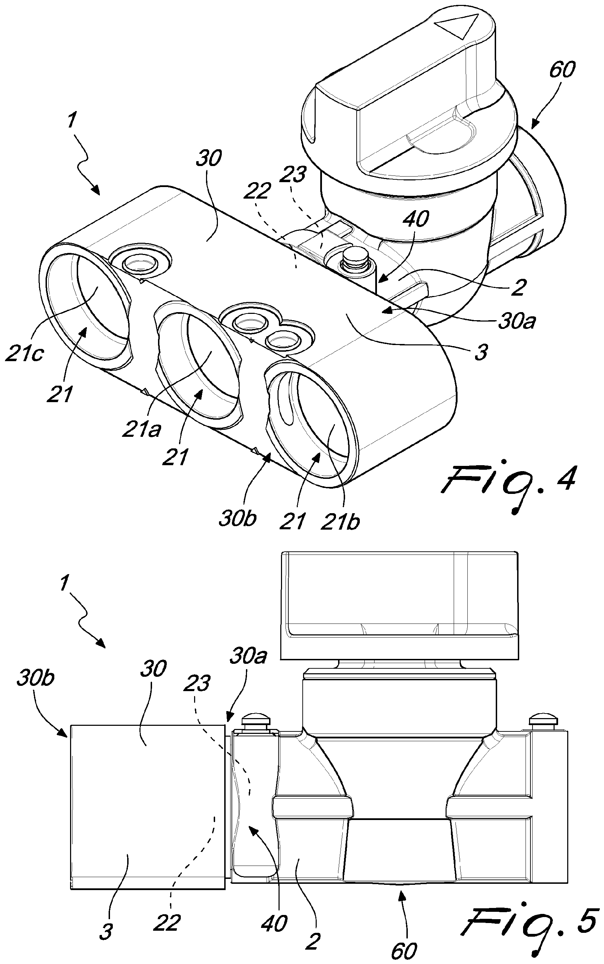

Figure 4 is a perspective view of a flow control valve associated with a distribution device according to the invention;
Figure 5 is a side elevation view of the flow control valve associated with a distribution device shown in Figure 4;

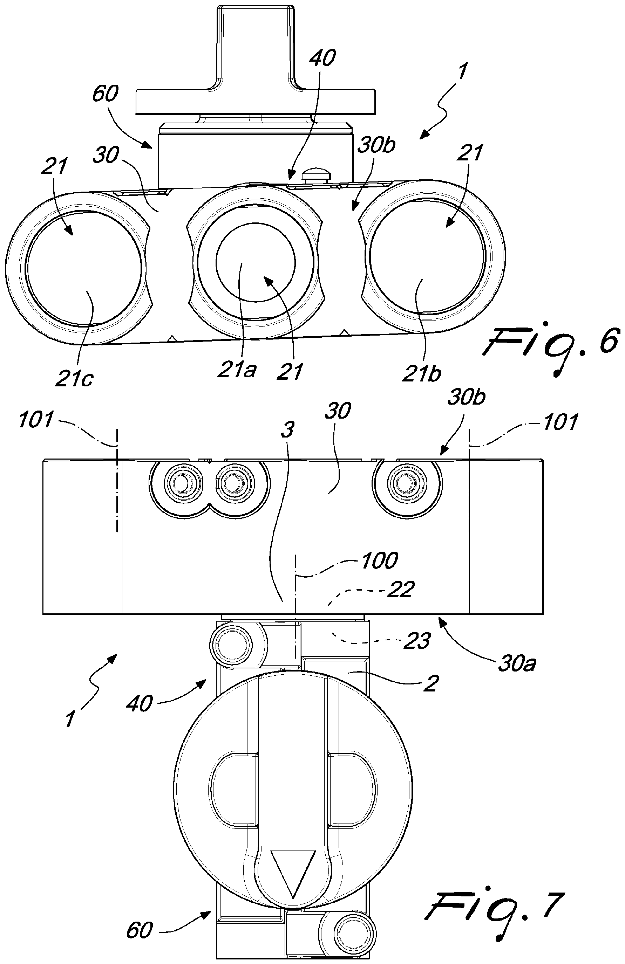

Figure 6 is a front view of the flow control valve associated with a distribution device shown in Figure 4;
Figure 7 is a top view of the flow control valve associated with a distribution device shown in Figure 4;

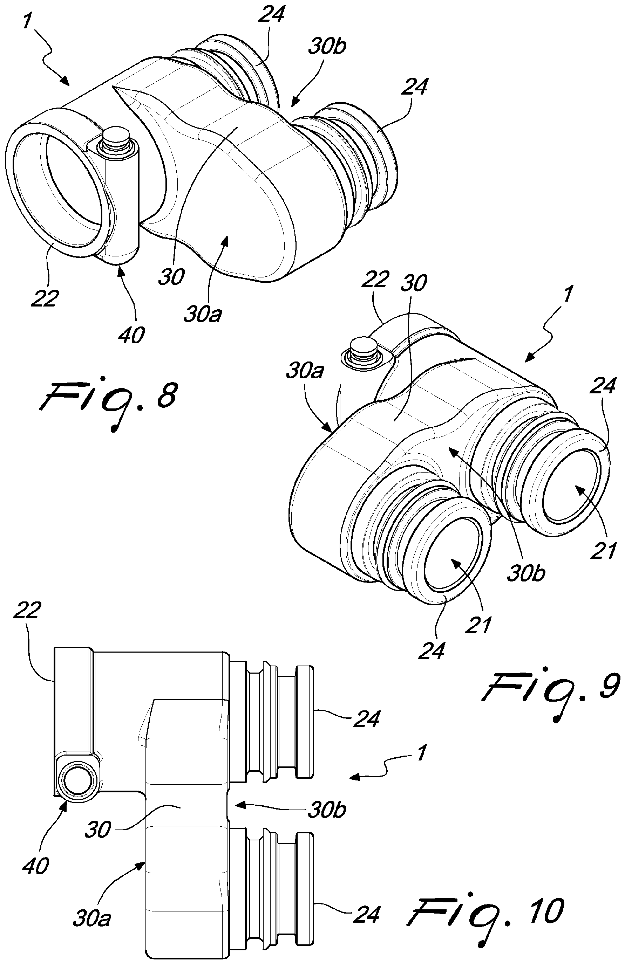

Figure 8 is a perspective view of a distribution device according to the invention;
Figure 9 is a perspective view, taken from another viewpoint, of a distribution device according to the invention;
Figure 10 is a top view of the distribution device of Figure 8;
Figure 11 is a top view of the distribution device associated with a flow control valve;
Figure 12 is a perspective view of a distribution device according to the invention associated with a flow control valve.

In the exemplary embodiments that follow, individual characteristics, given in relation to specific examples, may actually be interchanged with other different characteristics that exist in other exemplary embodiments.

With reference to the figures, the present invention relates to a fluid distribution device, generally designated by the reference numeral 1.

The distribution device 1 comprises a body 30 that defines at least two axial ducts 21.

The two or more axial ducts 21 are mutually connected in order to allow the passage of fluid from one to the other and are arranged substantially parallel to each other and mutually side by side.

A first opening 22 is provided at a first longitudinal end 30a of the body 30 and is associated with a respective axial duct 21a.

The first opening 22 can be connected detachably to a first connecting body 23.

The body 30 comprises, at the second longitudinal end 30b that lies opposite the first longitudinal end 30a, at least two second openings 24.

Each second opening 24 is associated with a respective axial duct 21a, 21b, et cetera, and can be connected detachably to a respective second connecting body 25.

The first opening 22 can be oriented about its own axis 100 with respect to the first connecting body 23 and the second connecting body 25 can be oriented about the axis 101 of the respective second opening 24.

With reference to the embodiment shown in the figures, the distribution device 1 comprises, at the first longitudinal end 30a of the body 30, a single first opening 22.

Advantageously, the distribution device 1 comprises means 40 for mutual connection between the first connecting body 23 and the respective first opening 22.

Conveniently, the distribution device 1 is provided with means 40 for mutual connection between each second opening 24 and the respective second connecting body 25.

By way of example, the second connecting body 25 comprises a connector that is connected to a portion of a distribution duct to be connected to the distribution device 1.

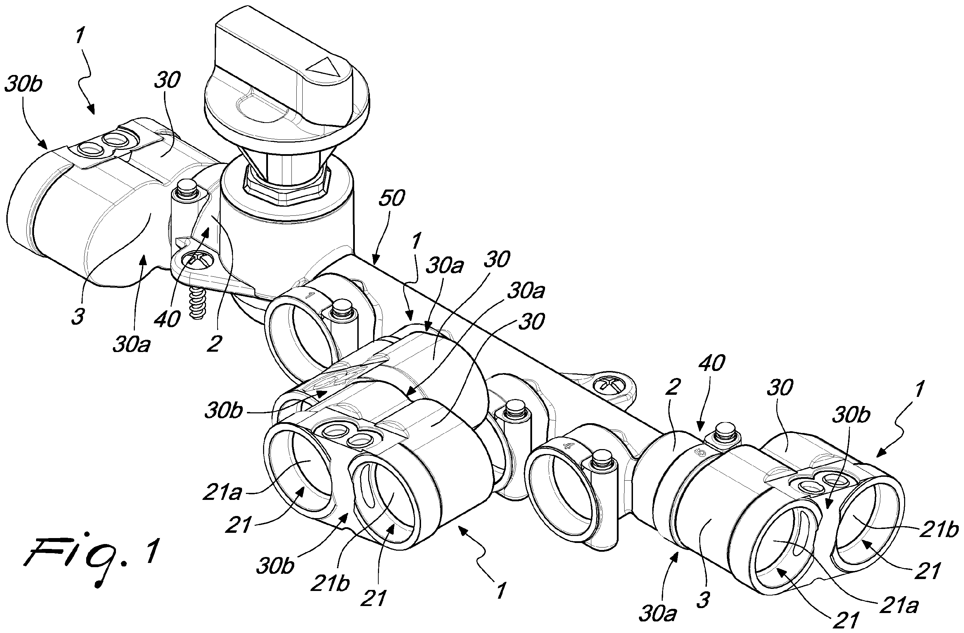

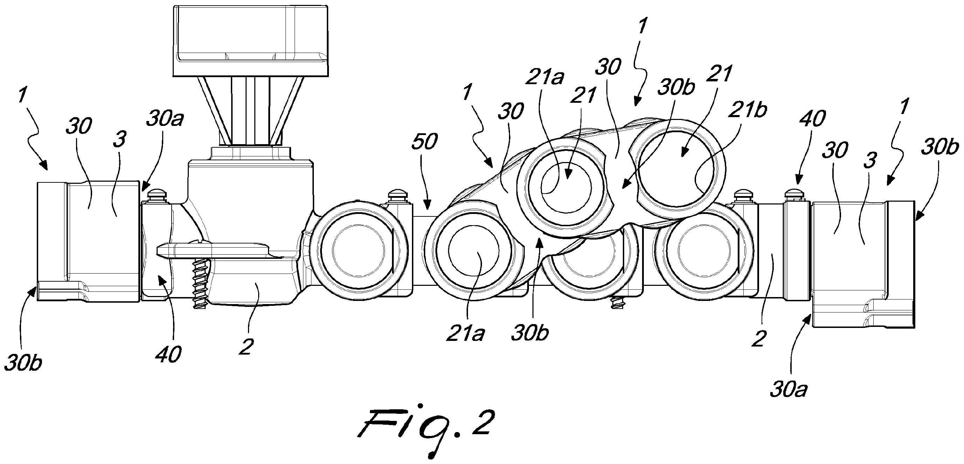

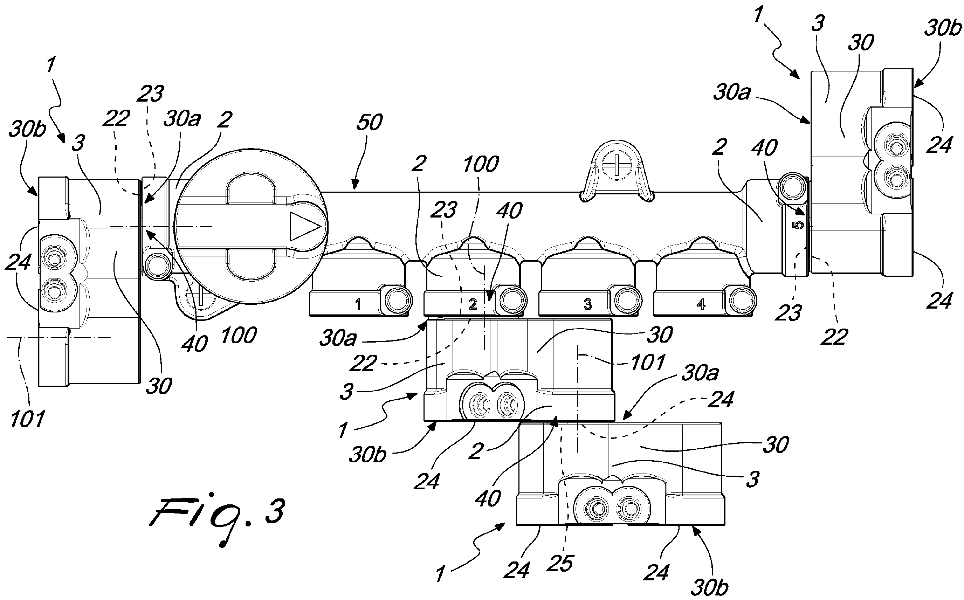

As shown in Figures 1 to 3, the second connecting body 25 can be constituted by a first opening 22 of another distribution device 1.

In this manner it is possible to arrange in series or in a cascade configuration a plurality of bodies 30, in practice multiplying the second openings 24 that can be connected to respective second connecting bodies 25.

According to a preferred embodiment, the mutual connection means 40 are of the type disclosed and claimed in European Patent no. EP1024324B1 by the same applicant.

In this regard, the mutual connection means 40 comprise two elements 2, 3 to be mutually connected, which are defined respectively on the first connecting body 23 and on the first opening 22.

The mutual connection means 40 comprise two interconnection bodies, respectively a substantially cylindrical or conical seat defined in one of the elements to be connected and a substantially cylindrical or conical sleeve that can be coupled to the seat and is provided at the other element to be connected.

The sleeve has, on the outer lateral surface of its portion that can be inserted in the seat, at least one axial shoulder that is directed in the opposite direction with respect to the end of the sleeve that can be inserted in the seat and can be positioned, with the insertion of the sleeve in the seat, at at least one passage defined in the portion of the element to be connected that is occupied by the seat and interferes with the lateral surface of the seat.

The passage is extended along a substantially rectilinear direction that is perpendicular to the axis of the seat and can be occupied by a locking pin that defines an abutment for the or each shoulder in order to prevent the axial extraction of the sleeve from the seat.

The two elements 2, 3 to be mutually connected by way of the mutual connection means 40 can also be defined respectively on the second opening 24 and on the second connecting body 25.

The choice to use mutual connection means 40 of the type described above allows to orient extremely precisely and rapidly the body 30 with respect to the connecting bodies 23 and 25 while allowing to maintain also a very short center distance between the axial ducts 21.

In particular, the mutual connection means 40 are adapted to allow the orientability of the axis 101 of the second opening 24 about the axis 100 of the first opening 22 that is spaced therefrom.

By way of example, the first connecting body 23 can be defined at a manifold 50 for the distribution of a fluid.

The first connecting body 23 may also be provided at an outlet end of a valve body 60.

The first opening 22 therefore can be connected, by means of the first connecting body 23, to a fluid delivery duct and the second openings 24 can be connected to second connecting bodies 25 connected to fluid supply ducts.

Nothing prevents, however, connecting one of the second openings 24 to a fluid supply duct, such fluid being then able to exit toward one or more delivery ducts connected to the other second openings 24 and to the first opening 22.

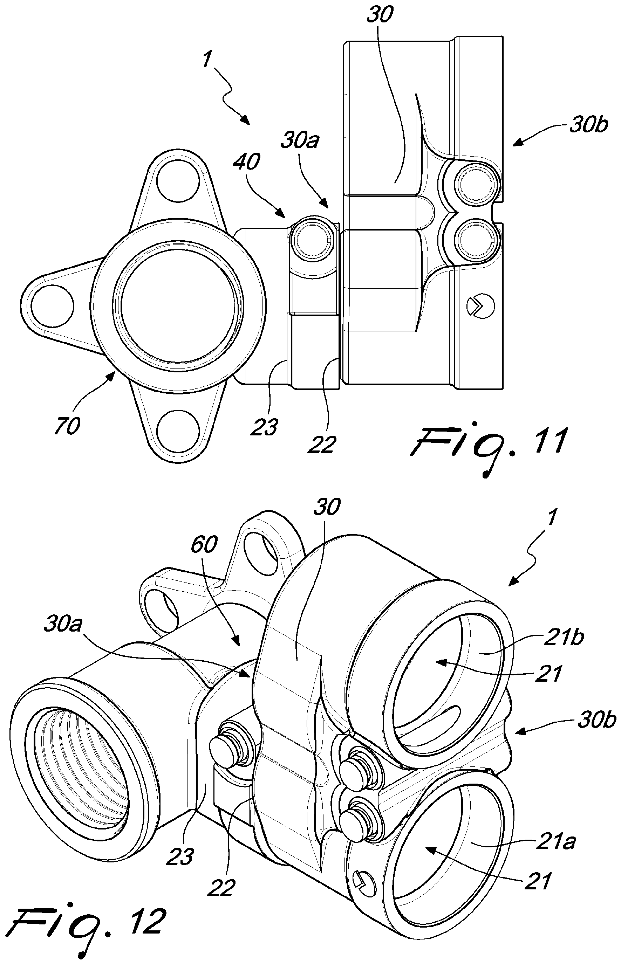

A solution of this type is shown in Figures 11 to 12, in which the first opening 22 is connected to a first connecting body 23 that leads into a flow control valve 60.

If the flow control valve is closed, the flow that enters through one of the second openings 24 is in practice directed in output through another second opening 24.

Use of a distribution device according to the invention is evident from what has been described above.

In particular, if during an intervention on a network there is the need to utilize an additional coupling with respect to the ones already provided along the network, it is possible to simply couple to the existing coupling a distribution device according to the invention, typically connecting the first opening 22 to the existing coupling, which constitutes the first connecting body 23, in order to have in output two or more second openings 24, which are arranged with an orientation that is similar to the first opening 22 and are mutually spaced with respect to the first opening 22.

By way of the orientability of the body 30 about the axis 100 of the first opening 22 it is possible to arrange the second openings 24 as a function of the position of the other elements that constitute the network, so as to be able to utilize to the fullest extent the space available.

All the characteristics of the invention that are indicated above as advantageous, convenient or the like may also be omitted or be replaced with equivalents.

The invention thus conceived is susceptible of numerous modifications and variations, all of which are within the scope of the appended claims.

In practice it has been found that the invention has achieved the intended aim and objects in all of its embodiments.

In practice, the dimensions may be any according to requirements.

## Claims

1. A device (1) for the distribution of fluids, comprising a body (30), a first connecting body (23) and a second connecting body (25), the body (30) defining at least two axial ducts (21), which are mutually connected to allow the passage of fluid from one to the other and are arranged substantially parallel to each other and mutually side by side, there being provided, at a first longitudinal end (30a) of said body (30), at least one first opening (22) that is associated with one of said axial ducts (21a) and is connected detachably to the first connecting body (23), said body (30) comprising, at the second longitudinal end (30b), at least two second openings (24), which are each associated with a respective axial duct (21a, 21b) and can be connected detachably to the respective second connecting body (25), said first opening (22) being orientable about its own axis (100) with respect to the respective first connecting body (23) and said second connecting body (25) being orientable about the axis (101) of the respective second opening (24), means (40) for mutual connection between said first connecting body (23) and said first opening (22) and means (40) for mutual connection between said second opening (24) and the respective second connecting body (25) being provided, said mutual connection means (40) comprising two elements (2, 3) to be mutually connected and defined respectively on said first connecting body (23) and on said first opening (22) and on said second opening (24) and on said second connecting body (25), said mutual connection means (40) comprising two interconnection bodies, respectively a substantially cylindrical or conical seat defined on one of said elements to be connected and a substantially cylindrical or conical sleeve that can be coupled to said seat and is provided at the other element to be connected, said sleeve having, on the outer lateral surface of its portion that can be inserted in the seat, at least one axial shoulder that is directed in the opposite direction with respect to the end of said sleeve that can be inserted in said seat and can be arranged, with the insertion of said sleeve in said seat, at at least one passage defined in the occupied portion of the element to be connected that interferes with the lateral surface of said seat, said passage being extended along a substantially rectilinear direction that is perpendicular to the axis of said seat and is occupied by a locking pin that defines an abutment for said at least one shoulder, in order to prevent the axial extraction of said sleeve from said seat, said mutual connection means (40) being adapted to allow the orientability of the axis (101) of the second opening (24) about the axis (100) of the first opening (22) that is spaced therefrom, wherein said second connecting body (25) comprises a first opening (22) of another distribution device (1).

2. The distribution device (1) according to claim 1, **characterized in that** it comprises, at said first longitudinal end (30a) of said body (30), a single first opening (22).

3. The distribution device (1) according to one or more of the preceding claims, **characterized in that** said first connecting body (23) comprises a connector that is connected to a portion of distribution duct.

4. The distribution device (1) according to one or more of the preceding claims, **characterized in that** said first connecting body (23) is defined at a manifold (50) for the distribution of a fluid.

5. The distribution device (1) according to one or more of the preceding claims, **characterized in that** said first connecting body (23) is defined at an outlet end of a valve body (60).

## Patentansprüche

1. Eine Vorrichtung (1) zur Verteilung von Fluiden, die einen Körper (30), einen ersten Verbindungskörper (23) und einen zweiten Verbindungskörper (25) umfasst, wobei der Körper (30) mindestens zwei axiale Passagen (21) bestimmt, die miteinander verbunden sind, um den Durchfluss von Fluid von einer zur anderen zu ermöglichen, und im Wesentlichen parallel zueinander und nebeneinander angeordnet sind, wobei an einem ersten Längsende (30a) des Körpers (30) mindestens eine erste Öffnung (22) angebracht ist, die mit einer der axialen Passagen (21a) und lösbar mit dem ersten Verbindungskörper (23) verbunden ist; wobei der Körper (30) am zweiten Längsende (30b) mindestens zwei zweite Öffnungen (24) umfasst, welche jeweils mit einer entsprechenden axialen Passage (21a, 21b) in Verbindung stehen und lösbar mit dem entsprechenden zweiten Verbindungskörper (25) verbunden werden können; wobei die erste Öffnung (22) mit Bezug auf den entsprechenden ersten Verbindungskörper (23) um ihre eigene Achse (100) ausgerichtet werden kann und der zweite Verbindungskörper (25) um die Achse (101) der entsprechenden zweiten Öffnung (24) ausgerichtet werden kann; wobei Mittel (40) zur Verbindung des ersten Verbindungskörpers (23) und der ersten Öffnung (22) miteinander und Mittel (40) zur Verbindung der zweiten Öffnung (24) und des entsprechenden zweiten Verbindungskörpers (25) miteinander bereitgestellt sind, wobei die Mittel (40) zur Verbindung miteinander zwei Elemente (2, 3) umfassen, die miteinander zu verbinden und an dem ersten Verbindungskörper (23) beziehungsweise an der ersten Öffnung (22) beziehungsweise an der zweiten Öffnung (24) beziehungsweise an dem zweiten Verbindungskörper (25) bestimmt sind; wobei die Mittel (40) zur Verbindung miteinander zwei Verbindungskörper umfassen, einen im Wesentlichen zylindrischen oder kegelförmigen Sitz, der an einem der anzuschließenden Elemente bestimmt ist, und eine im Wesentlichen zylindrische oder kegelförmige Buchse, die mit dem Sitz gekoppelt werden kann und an dem anderen anzuschließenden Element angebracht ist; wobei die Buchse an der äußeren Seitenfläche ihres Abschnitts, der in den Sitz eingeführt werden kann, mindestens eine axiale Schulter hat, die in die entgegengesetzte Richtung zeigt wie das Ende der Buchse, das in den Sitz eingeführt werden kann, und mit dem Einführen der Buchse in den Sitz an mindestens einem Durchgang angeordnet werden kann, der in dem belegten Abschnitt des anzuschließenden Elements bestimmt ist, der mit der Seitenfläche des Sitzes in Eingriff steht; wobei der Durchgang sich entlang einer im Wesentlichen geradlinigen Richtung erstreckt, die senkrecht zur Achse des Sitzes ist, und von einem Sperrstift belegt ist, der ein Widerlager für die mindestens eine Schulter bestimmt, um das axiale Herausziehen der Buchse aus dem Sitz zu verhindern; wobei die Mittel (40) zur Verbindung miteinander ausgebildet sind, um die Orientierbarkeit der Achse (101) der zweiten Öffnung (24) um die Achse (100) der ersten Öffnung (22) zu ermöglichen, die davon beabstandet ist; wobei der zweite Verbindungskörper (25) eine erste Öffnung (22) einer anderen Verteilungsvorrichtung (1) umfasst.

2. Die Verteilungsvorrichtung (1) gemäß Anspruch 1, **dadurch gekennzeichnet, dass** sie an dem ersten Längsende (30a) des Körpers (30) eine einzelne erste Öffnung (22) umfasst.

3. Die Verteilungsvorrichtung (1) gemäß einem oder mehreren der obigen Ansprüche, **dadurch gekennzeichnet, dass** der erste Verbindungskörper (23) ein Verbindungselement umfasst, das mit einem Teil eines Verteilerrohrs verbunden ist.

4. Die Verteilungsvorrichtung (1) gemäß einem oder mehreren der obigen Ansprüche, **dadurch gekennzeichnet, dass** der erste Verbindungskörper (23) an einem Rohranschluss (50) zum Verteilen eines Fluids bestimmt ist.

5. Die Verteilungsvorrichtung (1) gemäß einem oder mehreren der obigen Ansprüche, **dadurch gekennzeichnet, dass** der erste Verbindungskörper (23) an einem Auslassende eines Ventilkörpers (60) bestimmt ist.

## Revendications

1. Dispositif (1) pour la distribution de fluides, comportant un corps (30), un premier corps de liaison (23) et un second corps de liaison (25), le corps (30) définissant au moins deux conduits axiaux (21), qui sont mutuellement reliés pour permettre le passage de fluide de l'un à l'autre et sont agencés sensiblement parallèles l'un à l'autre et mutuellement côte à côte, au moins une première ouverture (22) étant agencée, sur une première extrémité longitudinale (30a) dudit corps (30), qui est associée à l'un desdits conduits axiaux (21a) et est reliée de manière détachable au premier corps de liaison (23), ledit corps (30) comportant, sur la seconde extrémité longitudinale (30b), au moins deux secondes ouvertures (24), qui sont chacune associées à un conduit axial (21a, 21b) respectif et peuvent être reliées de manière détachable au second corps de liaison (25) respectif, ladite première ouverture (22) pouvant être orientée autour de son axe propre (100) par rapport au premier corps de liaison (23) respectif et ledit second corps de liaison (25) pouvant être orienté autour de l'axe (101) de la seconde ouverture (24) respective, des moyens (40) de liaison mutuelle entre ledit premier corps de liaison (23) et ladite première ouverture (22) et des moyens (40) de liaison mutuelle entre ladite seconde ouverture (24) et ledit second corps de liaison (25) respectif étant prévus, lesdits moyens de liaison mutuelle (40) comportant deux éléments (2, 3) devant être reliés mutuellement et définis respectivement sur ledit premier corps de liaison (23) et sur ladite première ouverture (22) et sur ladite seconde ouverture (24) et sur ledit second corps liaison (25), lesdits moyens de liaison mutuelle (40) comportant deux corps d'interconnexion, respectivement un siège sensiblement cylindrique ou conique défini sur l'un desdits éléments devant être reliés et un manchon sensiblement cylindrique ou conique qui peut être couplé audit siège et est agencé sur l'autre élément devant être relié, ledit manchon ayant, sur la surface latérale extérieure de sa partie qui peut être insérée dans le siège, au moins un épaulement axial qui est dirigé dans la direction opposée par rapport à l'extrémité dudit manchon qui peut être insérée dans ledit siège et peut être agencée, avec l'insertion dudit manchon dans ledit siège, sur au moins un passage défini dans la partie occupée de l'élément devant être relié qui interfère avec la surface latérale dudit siège, ledit passage s'étendant le long d'une direction sensiblement rectiligne qui est perpendiculaire à l'axe dudit siège et est occupée par une goupille de blocage qui définit une butée pour ledit au moins un épaulement, afin d'empêcher l'extraction axiale dudit manchon à partir dudit siège, lesdits moyens de liaison mutuelle (40) étant adaptés pour permettre l'orientabilité de l'axe (101) de la seconde ouverture (24) autour de l'axe (100) de la première ouverture (22) qui est espacée de celui-ci, dans lequel ledit second corps de liaison (25) comporte une première ouverture (22) d'un autre dispositif de distribution (1).

2. Dispositif de distribution (1) selon la revendication 1, **caractérisé en ce qu'**il comporte, sur ladite première extrémité longitudinale (30a) dudit corps (30), une seule première ouverture (22).

3. Dispositif de distribution (1) selon une ou plusieurs des revendications précédentes, **caractérisé en ce que** ledit premier corps de liaison (23) comporte un raccord qui est relié à une partie de conduit de distribution.

4. Dispositif de distribution (1) selon une ou plusieurs des revendications précédentes, **caractérisé en ce que** ledit premier corps de liaison (23) est défini sur un collecteur (50) pour la distribution d'un fluide.

5. Dispositif de distribution (1) selon une ou plusieurs des revendications précédentes, **caractérisé en ce que** ledit premier corps de liaison (23) est défini sur une extrémité de sortie d'un corps de soupape (60).
